Europäisches Patentamt
European Patent Office
Office européen des brevets

(11) Veröffentlichungsnummer: **0 028 752**
**A1**

(12) # EUROPÄISCHE PATENTANMELDUNG

(21) Anmeldenummer: 80106569.9

(22) Anmeldetag: 25.10.80

(51) Int. Cl.³: C 07 F 9/65
A 01 N 57/36

(30) Priorität: 08.11.79 DE 2945101

(43) Veröffentlichungstag der Anmeldung: 20.05.81 Patentblatt 81/20

(84) Benannte Vertragsstaaten: BE CH DE FR GB IT LI NL


(71) Anmelder: BAYER AG
Zentralbereich Patente, Marken und Lizenzen
D-5090 Leverkusen 1, Bayerwerk(DE)

(72) Erfinder: Hoffmann, Hellmut, Prof. Dr.
Tersteegenweg 17
D-5600 Wuppertal 1(DE)

(72) Erfinder: Krüger, Bernd-Wieland, Dr.
Sillerstrasse 49
D-5600 Wuppertal 11(DE)

(72) Erfinder: Behrenz, Wolfgang, Dr.
Untergründemich 14
D-5063 Overath(DE)


(54) **Neue 2-(Thi)Oxo-1,3,2-oxazaphospholane, Verfahren zu ihrer Herstellung und ihre Verwendung als Synergisten in Schädlingsbekämpfungsmitteln.**


(57) Die Erfindung betrifft die neuen 2-(Thi) Oxo-1,3,2-oxazaphospholane der Formel

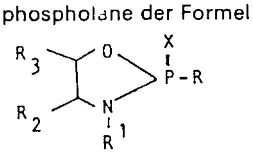

(1)

in welcher

x für Sauerstoff oder Schwefel steht

R für gegebenenfalls substituierte Reste Alkenyl, Alkinyl, Phenyl, Alkoxy, Alkenoxy, Alkinoxy, Alkylthio, Amino, Mono- oder Dialkylamino, inklusive heterocyclische Aminoreste, Phenoxy oder Phenylthio und, für den Fall, daß X für Schwefel steht, auch für gegebenenfalls substituiertes Alkyl steht,

$R^1$ für Wasserstoff oder für gegebenenfalls substituierte Reste Alkyl, Aralkyl, Alkenyl oder Alkinyl steht,

$R^2$ einzeln für Wasserstoff oder gegebenenfalls substituiertes Alkyl, Aralkyl oder zusammen mit $R^1$ für Alkylen steht, und

$R^3$ für Alkyl, oder, für den Fall, daß R für Alkenyl, Alkinyl, Alkenoxy, Alkinoxy und/oder $R^1$ für Alkenyl oder Alkinyl stehen, oder für den Fall, daß $R^1$ und $R^2$ zusammen für Alkenyl stehen, auch für Wasserstoff oder Phenyl steht

sowie Verfahren zu ihrer Herstellung z.B. aus 2 (Thi) Oxo-2-halogen-1, 3,2-oxazaphospholanen und ihre Verwendung als Synergisten in Schädlingsbekämpfungsmitteln, insbesondere in Insektiziden.


EP 0 028 752 A1

Croydon Printing Company Ltd.

0028752

BAYER AKTIENGESELLSCHAFT 5090 Leverkusen-Bayerwerk
Zentralbereich
Patente Marken und Lizenzen Ad/W
Ib

# Neue 2-(Thi )Oxo-1,3,2-oxazaphospholane, Verfahren zu ihrer Herstellung und ihre Verwendung als Synergisten in Schädlingsbekämpfungsmitteln

Die Erfindung betrifft neue 2-(Thi)Oxo-1,3,2-oxazaphospholane, Verfahren zu ihrer Herstellung und ihre Verwendung als Synergisten in Schädlingsbekämpfungsmitteln.

Es ist bereits bekannt, daß die folgenden Wirkstoffe bzw. Wirkstoffgruppen pestizide, insbesondere insektizide und akarizide Eigenschaften besitzen:

A) Carbaminsäureester, wie z.B. N-Methyl-O-(2-isopropoxy-phenyl)-carbaminsäureester, N-Methyl-O-(2,3-dihydro-2,2-dimethyl-7-benzofuranyl)-carbaminsäureester, N-Methyl-O-(2,3-(dimethyl-methylendioxy)-phenyl)-carbaminsäureester und N-Methyl-O-(1-methylthio-ethyliden-amino)-carbaminsäureester;

B) Carbonsäureester, wie z.B. 2,2-Dimethyl-3-(2-methylpropen-1-yl)-cyclopropancarbonsäure-(2,3,4,5-tetra-

hydro-phthalimido-methyl)-ester, 2,2-Dimethyl-3-(2,2-dichlor-vinyl)-cyclopropancarbonsäure-(3-phenoxy-benzyl)-ester, 2,2Dimethyl-3-(2,2-dichlor-vinyl)-cyclopropancarbonsäure-(α-cyano-4-fluor-3-phenoxy-benzyl)-ester, 2,2-Dimethyl-3-(2,2-dichlor-vinyl)-cyclopropancarbonsäure-(pentafluor-benzyl)-ester und Essigsäure-(α-trichlormethyl-3,4-dichlor-benzyl)-ester;

C) Halogen(cyclo)alkane, wie z.B. Hexachlorcyclohexan, sowie

D) Phosphorsäure- und Phosphonsäureester.

Weiterhin sind synergistische Mischungen von Carbaminsäureestern, wie z.B. 2-Isopropoxy-phenyl-N-methylcarbamat oder von Phosphorsäureestern, z.B. O,O-Diethyl-O-(2-isopropyl-4-methyl-pyrimidin(6)yl)-thionophosphorsäureester oder von natürlichen oder synthetischen Pyrethroiden mit Piperonylethern, wie z.B. α-(2-(2-Butoxy-ethoxy)-ethoxy)-4,5-methylendioxy-2-propyl-toluol, bekannt (vergleiche Bull. Wld. Health Org. 1966, 35, Seiten 691 - 708; Schrader, G.: Die Entwicklung neuer insektizider Phosphorsäureester 1963, S. 158; Perkov, W.: Die Insektizide, 1966, Seiten 516 - 524). Doch ist die Wirksamkeit dieser synergistischen Wirkstoffkombinationen nicht befriedigend. Eine gewisse praktische Bedeutung hat bisher nur das α-(2-(2-Butoxy-ethoxy)-ethoxy)-4,5-methylendioxy-2-propyl-toluol erlangt.

Es wurden nun die neuen 2-(Thi)Oxo-1,3,2-oxazaphospholane der Formel I

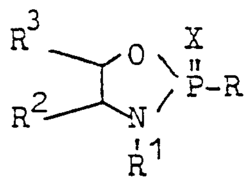

(I)

gefunden, in welcher

X für Sauerstoff oder Schwefel steht,

R für gegebenenfalls substituierte Reste Alkenyl, Alkinyl, Phenyl, Alkoxy, Alkenoxy, Alkinoxy, Alkylthio, Amino, Mono- oder Dialkylamino, heterocyclisches Amino, Phenoxy oder Phenylthio und, für den Fall, daß X für Schwefel steht, auch für gegebenenfalls substituiertes Alkyl steht,

$R^1$ für Wasserstoff oder für gegebenenfalls substituierte Reste Alkyl, Aralkyl, Alkenyl oder Alkinyl steht,

$R^2$ einzeln für Wasserstoff oder gegebenenfalls substituiertes Alkyl, Aralkyl oder zusammen mit $R^1$ für Alkylen steht, und

$R^3$ für Alkyl, oder, für den Fall, daß R für Alkenyl, Alkinyl, Alkenoxy, Alkinoxy und/oder $R^1$ für Alkenyl oder Alkinyl stehen, oder für den Fall, daß $R^1$ und $R^2$ zusammen für Alkylen stehen, auch für Wasserstoff oder Phenyl steht.

Man erhält Verbindungen der Formel (I), in welcher R für gegebenenfalls substituierte Reste Alkoxy, Alkenoxy, Alkinoxy, Alkylthio, Mono- oder Dialkylamino, heterocyclisches Amino, Phenoxy

oder Phenylthio steht,

wenn man 2-(Thi)Oxo-2-halogen-1,3,2-oxazaphospholane der Formel II

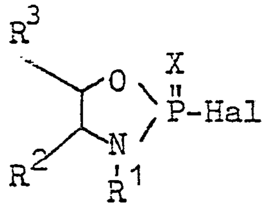

(II)

in welcher

X, $R^1$, $R^2$ und $R^3$ die oben angegebenen Bedeutungen haben, und Hal für Halogen, insbesondere für Chlor, steht,

mit Verbindungen der Formel III

H-R (III)

in welcher

R für gegebenenfalls substituierte Reste Alkoxy, Alkenoxy, Alkinoxy, Alkylthio, Mono- oder Dialkylamino, Phenoxy oder Phenylthio steht,

gegebenenfalls in Gegenwart eines Säureakzeptors und gegebenenfalls unter Verwendung eines Verdünnungsmittels umsetzt ("Verfahren (1)").

Verbindungen der Formel (I), in welcher

R für gegebenenfalls substituierte Reste Alkyl, Alkenyl, Alkinyl oder Phenyl steht, erhält man, wenn man (Thio)-phosphonsäuredichloride der Formel IV

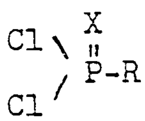

(IV)

in welcher

X für Sauerstoff oder Schwefel steht und

R für gegebenenfalls substituierte Reste Alkyl, Alkenyl, Alkinyl oder Phenyl steht,

mit Amino-alkoholen der Formel V

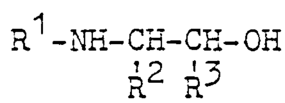

(V)

in welcher

$R^1$, $R^2$ und $R^3$ die oben angegebenen Bedeutungen haben,

gegebenenfalls in Gegenwart eines Säureakzeptors und gegebenenfalls unter Verwendung von Verdünnungsmitteln umsetzt ("Verfahren (2)").

Kombinationen aus den neuen 2-(Thi)Oxo-1,3,2-oxazaphospholanen der Formel (I) und

A) Carbaminsäureestern,

B) Carbonsäureester, einschließlich der natürlichen und synthetischen Pyrethroide

C) Halogen-(cyclo)alkanen und/oder

D) Phosphorsäure- und Phosphonsäure-estern

zeichnen sich durch hohe pestizide Wirksamkeit aus und zeigen zum Teil auch fungizide Wirkung.

Die Verbindungen der Formel (I) zeigen synergistische Wirkung vorzugsweise bei

A) Carbaminsäureestern der Formel VI

$$R^6\text{-O-CO-N}\begin{matrix}/R^4 \\ \backslash R^5\end{matrix} \qquad \text{(VI)}$$

in welcher

$R^4$ für Wasserstoff oder $C_1$-$C_4$-Alkyl steht,

$R^5$ für $C_1$-$C_4$-Alkyl, für gegebenenfalls durch Halogen, Hydroxy oder Methylthio substituiertes $C_1$-$C_4$-Alkyl-carbonyl oder für den Rest S-Z steht, wobei

Z für gegebenenfalls halogen-substituiertes $C_1$-$C_4$-Alkyl oder für gegebenenfalls durch Halogen, Cyano, $C_1$-$C_4$-Alkyl, Trihalogenmethylthio, Trihalogen-methyl und/oder Nitro substituiertes Phenyl, oder für $C_1$-$C_4$-Alkoxy-carbonyl steht, und

$R^6$ für Aryl, für einen heterocyclischen Rest oder für einen Oximrest steht.

Als Wirkstoffkomponenten ganz besonders bevorzugt sind Carbaminsäureester der Formel (VI), in welcher

$R^6$ für gegebenenfalls durch $C_1$-$C_4$-Alkyl, $C_1$-$C_4$-Alkoxy, $C_1$-$C_4$-Alkoxy-methyl, $C_1$-$C_4$-Alkylthio, $C_1$-$C_4$-Alkyl-thio-methyl, $C_1$-$C_4$-Alkylamino, Di-($C_1$-$C_4$-alkyl)-amino, Di-($C_2$-$C_4$-alkenyl)-amino und/oder Halogen substituierte Reste Phenyl, Naphthyl, 2,3-Dihydrobenzofuranyl, Methylendioxyphenyl, Dioxolanylphenyl, Pyrazolyl oder Pyrimidinyl steht, oder in welcher

$R^6$ für einen Alkylidenamino-rest der Formel VI a



BAD ORIGINAL

$$\begin{matrix} R^7 \diagdown \\ R^8 \diagup \end{matrix} C{=}N- \qquad \text{(VI a)}$$

steht, in welcher

$R^7$ und $R^8$ gleich oder verschieden sind und einzeln für $C_1$-$C_5$-Alkyl, $C_3$-$C_8$-Cycloalkyl, $C_2$-$C_5$-Alkenyl, $C_2$-$C_5$-Alkinyl, $C_1$-$C_4$-Alkoxy, $C_1$-$C_4$-Alkylthio, $C_1$-$C_4$-Alkylthio-methyl, $C_1$-$C_4$-Alkoxycarbonyl, Carbamoyl, Cyano oder Phenyl, oder zusammen für, gegebenenfalls durch $C_1$-$C_4$-Alkyl substituiertes Alkylendioxy oder Alkylendimercapto stehen.

Als Beispiele für die Carbaminsäureester der Formel (VI) seien genannt:
2-Methyl-phenyl-, 2-Ethyl-phenyl-, 2-iso-Propyl-phenyl-, 2-sek.-Butyl-phenyl-, 2-Methoxy-phenyl-, 2-Ethoxy-phenyl-, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylaminophenyl-, 2-Ethylthiomethyl-phenyl-, 1-Naphthyl-, 2,3-Dihydro-2,2-dimethyl-7-benzofuranyl-, 2,3-(Dimethyl-methylendioxy)-phenyl-, 2-(4,5-Dimethyl-1,3-dioxolan-2-yl)-phenyl-, 1-Methylthio-ethyliden-amino-, 2-Methylthio-2-methyl-propyliden-amino-, 1-(2-Cyano-ethylthio)-ethyliden-amino- und 1-Methylthiomethyl-2,2-dimethyl-propyliden-amino- -N-methyl-carbaminsäureester.

Weiter zeigt sich die synergistische Wirkung der neuen Verbindungen der Formel (I) vorzugsweise bei

B) Carbonsäureestern der Formel VII

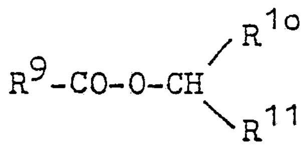 (VII)

in welcher

$R^9$ für einen offenkettigen oder cyclischen Alkylrest steht, der gegebenenfalls substituiert ist durch Halogen, Alkyl, Cycloalkyl, durch gegebenenfalls durch Halogen und/oder Alkoxy substituiertes Alkenyl, durch Phenyl oder Styryl, welche gegebenenfalls durch Halogen, gegebenenfalls halogen-substituierte Reste Alkyl, Alkoxy, Alkylendioxy und/oder Alkylthio substituiert sind, durch spirocyclisch verknüpftes, gegebenenfalls halogen-substituiertes Cycloalk(en)yl, welches gegebenenfalls benzannelliert ist, in welcher weiter

$R^{10}$ für Wasserstoff, Alkyl, Halogenalkyl, Alkenyl, Alkinyl, oder Cyano steht, und

$R^{11}$ für einen gegebenenfalls substituierten Aryl-rest oder für einen Heterocyclus steht, oder zusammen mit $R^{10}$ und dem Kohlenstoffatom, an das beide Reste gebunden sind, einen Cyclopentenonring bildet.

Als Wirkstoffkomponenten ganz besonders bevorzugt sind Carbonsäureester der Formel (VII), in welcher

$R^9$ für den Rest 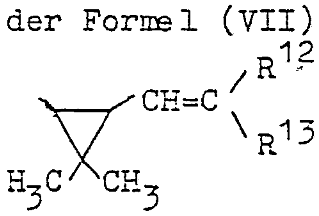

steht, worin

$R^{12}$ für Wasserstoff, Methyl, Fluor, Chlor oder Brom und

$R^{13}$ für Methyl, Fluor, Chlor, Brom, $C_1$-$C_2$-Fluoralkyl oder $C_1$-$C_2$-Chlorfluoralkyl oder für gegebenenfalls durch Halogen und/oder gegebenenfalls halogen-substituierte Reste $C_1$-$C_4$-Alkyl, $C_1$-$C_4$-Alkoxy, $C_1$-$C_4$-Alkylthio und/oder $C_1$-$C_2$-Alkylendioxy substituiertes Phenyl steht oder worin beide Reste $R^{12}$ und $R^{13}$ für $C_2$-$C_5$-Alkandiyl (Alkylen) stehen; oder in welcher

$R^9$ für den Rest $-\underset{R^{15}}{\underset{|}{CH}}-R^{14}$

steht, worin

$R^{14}$ für gegebenenfalls durch Halogen und/oder durch gegebenenfalls halogen-substituierte Reste $C_1$-$C_4$-Alkyl, $C_1$-$C_4$-Alkoxy, $C_1$-$C_4$-Alkylthio oder $C_1$-$C_2$-Alkylendioxy substituiertes Phenyl steht und

$R^{15}$ für Isopropyl oder Cyclopropyl steht; oder in welcher

$R^9$ für einen der Reste

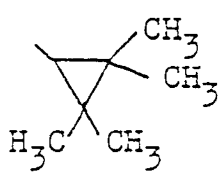 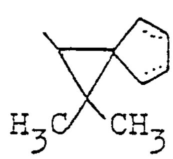 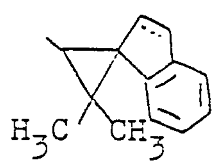 oder Methyl

steht; in welcher weiter

$R^{10}$ für Wasserstoff, $C_1$-$C_4$-Alkyl, $C_1$-$C_4$-Halogenalkyl, Cyano oder Ethinyl steht und

$R^{11}$ für gegebenenfalls durch Halogen und/oder durch einen gegebenenfalls halogen-substituierten Rest $C_1$-$C_4$-Alkyl,

$C_2$-$C_4$-Alkenyl, $C_1$-$C_4$-Alkoxy, $C_2$-$C_4$-Alkenoxy, $C_1$-$C_4$-Alkylthio, $C_1$-$C_2$-Alkylendioxy, Phenoxy und/oder Benzyl substituierte Reste Phenyl, Furyl oder Tetrahydrophthalimido steht.

Weiter sind die natürlich vorkommenden Pyrethroide besonders bevorzugt.

Als Beispiele für die Carbonsäureester der Formel (VII) seien genannt:
Essigsäure-[2,2,2-trichlor-1-(3,4-dichlorphenyl)-ethyl]-ester, 2,3,4,5-Tetrahydrophthalimidomethylchrysanthemat, 3-Phenoxybenzyl-[2,2-dimethyl-3-(2,2-dichlorvinyl)-cyclopropan]-carboxylat, (5-Benzyl-furyl)-methyl-2,2-dimethyl-3-(2-methylpropenyl) -cyclopropancarboxylat, (±)-as, trans-3-phenoxybenzyl-2,2-dimethyl-3-(2-methyl-propenyl)cyclopropancarboxylat, 2,2-Dimethyl-3-dichlorvinyl-as/trans-cyclopropancarbonsäure-α-cyano-3'-phenoxy-4'-fluorbenzylester, 5-benzyl-3-furylmethyl-d-cis(1R, 3S, E) 2,2-dimethyl-3-(2-oxo, 2,2,4,5-tetrahydrothiophenylidene-methyl)cyclopropancarboxylat, (R,S)-α-cyano-3-phenoxy-benzyl(R,S)-2-(4-chlorphenyl)-3-methylbutyrat, (±)-3-allyl-2-methyl-4-oxocyclopent-2-enyl-(+)-cis-trans-chrysanthemat, 2,2-Dimethyl-3-dichlorvinyl-cyclopropencarbonsäure-pentafluorbenzylester, [R,S]-α-cyano-3-phenoxybenzyl (1R, 1S)-cis, trans-3-(2,2-dichlorvinyl)-2,2-dimethyl-cyclopropencarboxylat, (S)-α-cyano-m-phenoxybenzyl-(1R, 3R)-3-(2,2-dibromovinyl)-2,2-dimethyl-cyclopropancarboxylat.

Die synergistische Wirkung der Verbindungen der Formel (I) zeigt sich ferner vorzugsweise bei Halogen(cyclo)-alkanen, wie z.B. Hexachlorcyclohexan, 1,1,1-Trichlor-2,2-bis-(4-chlor-phenyl)-ethan, 1,1,1-Trichlor-2,2-bis-(4-methoxy-phenyl)-ethan und 1,1-Dichlor-2,2-bis-(4-ethyl-phenyl)-ethan.



BAD ORIGINAL

C) Bevorzugte Phosphorsäure- und Phosphonsäureester D haben die Formel

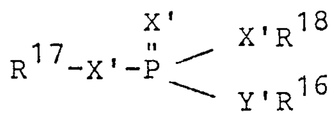 (VIII)

in welcher

X' für Sauerstoff oder Schwefel steht,

Y' für Sauerstoff, Schwefel, Imino oder für eine direkte Bindung zwischen dem P-Atom und $R^{16}$ steht,

$R^{17}$ und $R^{18}$ gleich oder verschieden sind und für gegebenenialls substituiertes Alkyl oder ARyl stehen und

$R^{16}$ für gegebenenfalls substituierte Reste Alkyl,Aryl, Heteroaryl, Aralkyl, Alkenyl, oder einen Oximrest oder für den gleichen Rest, an den es gebunden ist steht.

Besonders bevorzugt sind hierbei Phosphorsäure- und Phosphonsäureester der Formel VIII, in welcher

$R^{17}$ und $R^{18}$ gleich oder verschiecen sind und für $C_1$-$C_4$-Alkyl oder Phenyl stehen und

$R^{16}$ für gegebenenfalls durch Halogen, Hydroxy und/oder Cyano substituiertes $C_1$-$C_4$-Alkyl, für gegebenenfalls durch Halogen, Cyano, Nitro, Carbamoyl, $C_1$-$C_4$-Alkyl-sulfinyl, $C_1$-$C_4$-Alkylthio-carbonyl, $C_1$-$C_4$-Alkyl, $C_1$-$C_4$-Alkoxy, $C_1$-$C_4$-Alkylthio und/ oder $C_1$-$C_4$-Alkoxy-carbonyl substituiertes Phenyl, für gegebenenfalls durch Halogen und/oder halogensubstituiertes Phenyl, $C_1$-$C_4$-Alkoxy-carbonyl, $C_1$-$C_4$-Alkyl-amino-carbonyl oder Di-($C_1$-$C_4$-alkyl)-

aminocarbonyl substituiertes $C_2$-$C_4$-Alkenyl oder für einen Oximrest der Formel IIa

$$-N=C\begin{matrix} R^7 \\ R^8 \end{matrix} \quad \text{(IIa)}$$

steht, worin $R^7$ und $R^8$ die oben angegebenen Bedeutungen haben, wobei jedoch insbesondere $R^7$ für Cyano und $R^8$ für $C_1$-$C_4$-Alkyl oder Phenyl steht;

$R^{16}$ steht ferner insbesondere für gegebenenfalls durch Halogen, $C_1$-$C_4$-Alkyl, $C_1$-$C_4$-Alkoxy, $C_1$-$C_4$-Alkylthio, $C_1$-$C_4$-Alkyl-amino, Di-($C_1$-$C_4$-alkyl)-amino, $C_1$-$C_4$-Alkoxymethyl, $C_1$-$C_4$-Alkylthiomethyl, $C_1$-$C_4$-Alkyl-sulfinylmethyl und/oder $C_1$-$C_4$-Alkyl-sulfonylmethyl substituierte heteroaromatische Reste wie Pyridinyl, Chinolinyl, Chinoxalinyl, Pyrimidinyl, Benzo-oxotriazinyl, Pyrazolyl oder Imidazolyl.

Als Beispiel für die Phosphorsäureester der Formel (VIII) sei O,O-Dimethyl-O-(2,2-dichlor-vinyl)-phosphorsäureester genannt.

BAD ORIGINAL

Überraschenderweise ist die pestizide Wirksamkeit der erfindungsgemäßen Wirkstoffkombinationen wesentlich höher als die Wirkung der Einzelkomponenten bzw. die Summe der Wirkungen der Einzelkomponenten. Sie ist ferner wesentlich höher als die Wirkung von Wirkstoffkombinationen mit dem bekannten Synergisten Piperonylbutoxid.

Die neuen 2-(Thi)Oxo-1,3,2-oxazaphospholane sind durch Formel (I) definiert. Vorzugsweise stehen darin

X für Sauerstoff oder Schwefel,

R für $C_2$-$C_5$-Alkenyl, $C_2$-$C_5$-Alkinyl, Phenyl, $C_1$-$C_4$-Alkoxy, $C_2$-$C_5$-Alkenoxy, $C_2$-$C_5$-Alkinoxy, $C_1$-$C_4$-Alkylthio, Amino, $C_1$-$C_4$-Alkyl-amino, Di-($C_1$-$C_4$-Alkyl)-amino, Dimethylamino-methylen-amino, Morpholino, Pyrrolidino oder Piperidino oder für gegebenenfalls durch Halogen und/oder gegebenenfalls halogen-substituierte Reste $C_1$-$C_4$-Alkyl, $C_1$-$C_4$-Alkoxy, $C_1$-$C_2$-Alkylendioxy, $C_1$-$C_4$-Alkylthio und/oder durch Cyano oder Nitro substituierte Reste Phenoxy oder Phenylthio, und, für den Fall, daß X für Schwefel steht, auch für gegebenenfalls halogen-substituiertes $C_1$-$C_4$-Alkyl,

$R^1$ für Wasserstoff, $C_1$-$C_4$-Alkyl, Di-($C_1$-$C_2$-alkyl)-amino, $C_1$-$C_2$-Alkyl oder $C_2$-$C_5$-Alkenyl,

$R^2$ einzeln für Wasserstoff, $C_1$-$C_4$-Alkyl, $C_1$-$C_4$-Alkylthio-$C_1$-$C_2$-alkyl oder Benzyl, oder zusammen mit $R^1$ für Propan-1,3-diyl (Trimethylen), und

$R^3$ für $C_1$-$C_3$-Alkyl oder, für den Fall, daß R für Alkenyl, Alkinyl, Alkenoxy, Alkinoxy und/oder $R^1$ für Alkenyl oder Alkinyl stehen, oder, für den Fall, daß $R^1$ und $R^2$ zusammen für propan-1,3-diyl stehen, auch für Wasserstoff oder Phenyl.



BAD ORIGINAL

Verwendet man als Ausgangsstoffe bei Verfahren (1) zur Herstellung von Verbindungen der Formel (I) beispielsweise 2-Thioxo-2-chlor-5-methyl-1,3,2-oxazaphospholan und Methanol, und bei Verfahren (2) Methan-thionophosphonsäure-dichlorid und 1-Amino-propan-2-ol, so können die bei den Herstellungsverfahren ablaufenden Reaktionen durch folgende Formelschemata skizziert werden:

(1)

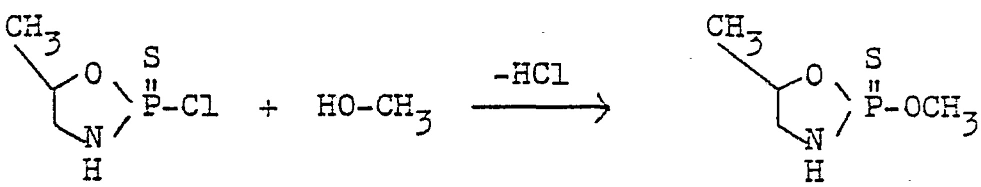


(2)

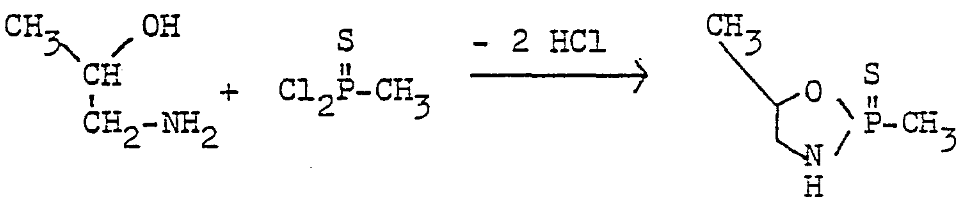


Die als Ausgangsstoffe zu verwendenden Verbindungen sind durch die Formeln (II), (III), (IV) und (V) definiert. Vorzugsweise haben darin X, R, $R^1$, $R^2$ und $R^3$ die gleichen Bedeutungen, wie sie bei der vorzugsweisen Definition der entsprechenden Reste in Formel (I) genannt sind.

Ausgangsverbindungen der Formeln (II), (III), (IV) und (V) sind bekannt.

Die Verfahren zur Herstellung der erfindungsgemäßen Verbindungen werden gegebenenfalls unter Mitverwendung geeigneter Lösungs- oder Verdünnungsmittel durchgeführt. Als solche kommen praktisch alle inerten organischen Solventien infrage. Hierzu gehören insbesondere aliphatische und aromatische, gegebenenfalls chlorierte, Kohlenwasserstoffe, wie Benzol, Toluol, Xylol, Methylenchlorid, Chloroform und Tetrachlorkohlenstoff.

Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triethylamin, Dimethylanilin, Dimethylbenzylamin und Pyridin.

Die Reaktionstemperatur kann innerhalb eines größeren Bereichs variiert werden. Im allgemeinen arbeitet man zwischen 0 und 1oo°C, vorzugsweise bei 1o bis 8o°C.

Die erfindungsgemäßen Verfahren werden im allgemeinen bei Normaldruck durchgeführt.

Zur Durchführung der erfindungsgemäßen Verfahren werden die Ausgangsstoffe gewöhnlich in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden

bei der erforderlichen Temperatur gerührt. Danach gibt man gegebenenfalls ein organisches Lösungsmittel, z.B. Toluol, zu und arbeitet die organische Phase wie üblich durch Waschen, Trocknen und Abdestillieren des Lösungsmittels auf.

Zur Reinigung der Produkte wird gegebenenfalls unter vermindertem Druck destilliert.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp.,Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp.,

Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff

und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

In den erfindungsgemäßen Schädlingsbekämpfungsmitteln liegen in den Wirkstoffkombinationen die Gewichtsverhältnisse der Verbindungen der Formel (I) zu den Wirkstoffen A), B), C) und/oder D vorzugsweise zwischen 0,1 : 10 und 10 : 0,1.

Herstellungsbeispiele

Beispiel 1:

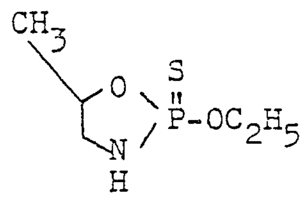

18 g (o,1 Mol) 2-Thioxo-2-chlor-5-methyl-1,3,2-oxazaphospholan werden in loo ml Toluol vorgelegt und bei einer Innentemperatur zwischen lo und 15°C mit einer Lösung von o,1 Mol Natrium-ethylat in Ethanol tropfenweise versetzt. Das Reaktionsgemisch wird noch zwei Stunden gerührt, mit Wasser gewaschen, getrocknet, filtriert und destilliert. Man erhält 15 g (83% der Theorie) 2-Thioxo-2-ethoxy-5-methyl-1,3,2-oxazaphospholan als farblose Flüssigkeit vom Siedepunkt 78°C/o,ol mbar und vom Brechungsindex $n_D^{23}$: 1,5o41.

Beispiel 2:

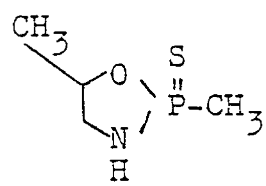

Zu einer gut gerührten Lösung von 75 g Methanthionophosphonsäuredichlorid in 1ooo ml Toluol läßt man bei 15-2o°C eine Lösung von 38 g 1-Aminopropanol-2 und lol g Triethylamin in 2oo ml Toluol innerhalb von 2-3 Stunden zutropfen. Man rührt über Nacht nach, wäscht mit Wasser, trocknet über Natriumsulfat, zieht das Lösungsmittel im Vakuum ab und destilliert den verbleibenden Rückstand. Ausbeute 48 g (63,5% der Theorie), Siedepunkt 74°C/o,ol mbar.

Analog Beispiel 1 bzw. 2 erhält man die Verbindungen der allgemeinen Formel I a

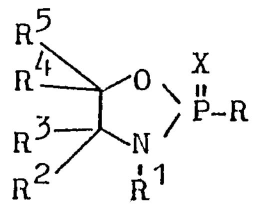

(Ia)

| Beispiel Nr. | R | $R^1$ | $R^2$ | $R^3$ | $R^4$ | $R^5$ | X | Ausbeute (% der Theorie) | Physikal. Daten Schmelzpunkt, Siedepunkt °C/mbar) |
|---|---|---|---|---|---|---|---|---|---|
| 3 | $OCH_3$ | H | H | H | H | $-CH_3$ | S | 78 | 64/o,ol |
| 4 | $SC_3H_7$-n | H | H | H | H | $-CH_3$ | S | 43 | 116/o,ol |
| 5 | $OC_3H_7$-n | H | H | H | H | $-CH_3$ | S | 62 | 78/o,ol |
| 6 | $OC_3H_7$-iso | H | H | H | H | $-CH_3$ | S | 46 | 74/o,ol |
| 7 | O-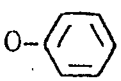-$SCH_3$ | H | H | H | H | $-CH_3$ | S | 71 | |
| 8 | 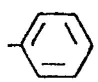 | H | H | H | H | $-CH_3$ | S | 66 | 84-88 |
| 9 | $-CH_2Cl$ | H | H | H | H | $-CH_3$ | S | 65 | 8o/o,ol |
| 10 | $-N(CH_3)_2$ | H | H | H | H | $-CH_3$ | O | 85 | |

| Beispiel Nr. | R | $R^1$ | $R^2$ | $R^3$ | $R^4$ | $R^5$ | X | Ausbeute (% der Theorie) | Physikal. Daten (Brechungsindex; Schmelzpunkt °C; Siedepunkt °C/mbar) |
|---|---|---|---|---|---|---|---|---|---|
| 11 | 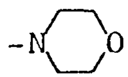 | H | H | H | H | $-CH_3$ | S | 54 | |
| 12 | $-CH=C(CH_3)_2$ | H | H | H | H | $-CH_3$ | S | 67 | |
| 13 | $-OC_2H_5$ | H | H | H | H | $-CH_3$ | O | 79 | $n_D^{25}$:1,4558 |
| 14 | $-SCH_3$ | H | H | H | H | $-CH_3$ | O | 78 | $n_D^{25}$:1,5215 |
| 15 | $-CH_3$ | $C_3H_7$-iso | H | H | H | $-CH_3$ | S | 41 | $n_D^{25}$:1,5o83 |
| 16 | $-OCH_3$ | $C_3H_7$-iso | H | H | H | $-CH_3$ | S | 62 | 62/o,o1 |
| 17 | $-N(CH_3)_2$ | H | H | H | H | $-CH_3$ | S | 61 | 94/o,o1 |
| 18 | -S- 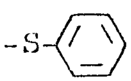 | H | H | H | H | $-CH_3$ | S | 61 | 48 |
| 19 | $-NH-C_3H_7$-iso | $C_2H_5$ | H | H | H | $-C_2H_5$ | S | 85 | 98/o,o1 |
| 2o | $-NH-C_3H_7$-n | $C_2H_5$ | H | H | H | $CH_3$ | S | 9o | 89/o,o1 |

| Beispiel Nr. | R | $R^1$ | $R^2$ | $R^3$ | $R^4$ | $R^5$ | X | Ausbeute (% der Theorie) | Physikal. Daten (Brechungsindex; Siedepunkt °C/mbar) |
|---|---|---|---|---|---|---|---|---|---|
| 21 | $-OC_2H_5$ | $C_2H_5$ | H | H | H | $-CH_3$ | S | 86 | 76/o,ol |
| 22 | 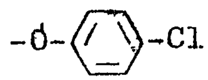 | $C_2H_5$ | H | H | H | $-CH_3$ | S | 96 | |
| 23 | 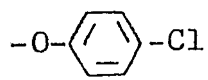 | H | H | H | H | $-CH_3$ | S | 68 | $n_D^{21}$:1,5318 |
| 24 | 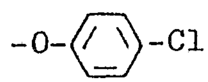 | $C_2H_5$ | H | H | H | $-C_2H_5$ | S | 69 | $n_D^{19}$:1,54o9 |
| 25 | $-OCH_3$ | $C_2H_5$ | H | H | H | $-C_2H_5$ | S | 91 | 78/o,ol |
| 26 | $-OCH_3$ | $C_2H_5$ | H | H | H | $-CH_3$ | S | 72 | 64/o,ol |
| 27 | $-OC_2H_5$ | $C_2H_5$ | H | H | H | $-C_2H_5$ | S | 85 | 69/o,ol |
| 28 | 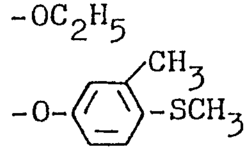 | $C_2H_5$ | H | H | H | $-C_2H_5$ | S | 82 | $n_D^{22}$:1,5751 |
| 29 | $-CH_3$ | $C_2H_5$ | H | H | H | $-CH_3$ | S | 78 | 86/o,ol |
| 3o | 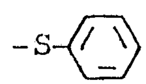 | $C_2H_5$ | H | H | H | $-CH_3$ | S | 73 | $n_D^{19}$:1,5992 |
| 31 | $-NH_2$ | $C_2H_5$ | H | H | H | $-CH_3$ | S | 78 | |

| Bei-spiel Nr. | R | $R^1$ | $R^2$ | $R^3$ | $R^4$ | $R^5$ | X | Ausbeute (% der Theorie) | Physikal. Daten (Brechungsindex; Siedepunkt °C/mbar) |
|---|---|---|---|---|---|---|---|---|---|
| 32 | $-SC_3H_7$-n | $-C_2H_5$ | H | H | H | $-CH_3$ | S | 77 | |
| 33 | $-OC_2H_5$ | $-C_2H_5$ | H | H | H | $-CH_3$ | O | 78 | 78/o,ol |
| 34 | $-OC_2H_5$ | $-C_2H_5$ | H | H | H | $-C_2H_5$ | O | 72 | 82/o,ol |
| 35 | $-CH_3$ | $-C_2H_5$ | H | H | H | $-C_2H_5$ | S | 79 | 82/o,ol |
| 36 | $-CH_3$ | $-C_2H_5$ | H | $-CH_3$ | H | $-CH_3$ | S | 41 | 74/o,ol |
| 37 | $-N(CH_3)_2$ | $-C_2H_5$ | H | H | H | $-C_2H_5$ | O | 63 | 89/o,ol |
| 38 | $-OC_2H_5$ | $-C_2H_5$ | H | $-CH_3$ | H | $-CH_3$ | O | 68 | 72/o,ol |
| 39 | $-OC_2H_5$ | $-C_3H_7$-iso | H | H | H | $-CH_3$ | O | 71 | 74/o,ol |
| 4o | -O-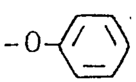 | $-C_2H_5$ | H | H | H | $-C_2H_5$ | O | 9o | $n_D^{2o}$:1,5o72 |
| 41 | -O-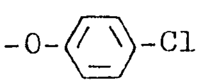-Cl | $-C_2H_5$ | H | H | H | $-C_2H_5$ | O | 74 | $n_D^{19}$:1,5187 |
| 42 | $-CH_3$ | $-CH_3$ | H | H | H | $-C_2H_5$ | S | 7o | 75/o,ol |

| Beispiel Nr. | R | $R^1$ | $R^2$ | $R^3$ | $R^4$ | $R^5$ | X | Ausbeute (% der Theorie) | Physikal. Daten (Brechungsindex; Siedepunkt °C/mbar) |
|---|---|---|---|---|---|---|---|---|---|
| 43 | -O-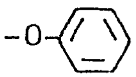 | $-C_3H_7$-iso | H | H | H | $-CH_3$ | O | 84 | $n_D^{21}$:1,5o79 |
| 44 | $-OCH_3$ | $-CH_3$ | H | H | H | $-C_2H_5$ | S | 77 | 68/o,o1 |
| 45 | $-OCH_3$ | $-C_2H_5$ | H | $-CH_3$ | H | $-CH_3$ | S | 72 | 82/o,o1 |
| 46 | -O-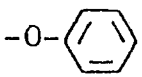-Cl | $-C_2H_5$ | H | $-CH_3$ | H | $-CH_3$ | S | 7o | |
| 47 | -S-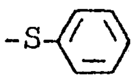 | $-C_2H_5$ | H | $-CH_3$ | H | $-CH_3$ | S | 91 | $n_D^{21}$:1,5856 |
| 48 | $-OC_2H_5$ | $-CH_3$ | H | H | H | $-C_2H_5$ | S | 69 | 74/o,o1 |
| 49 | $-OC_2H_5$ | $-C_2H_5$ | H | $-CH_3$ | H | $-CH_3$ | S | 31 | 84/o,o1 |
| 5o | -O-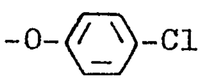-Cl | $-CH_3$ | H | H | H | $-C_2H_5$ | S | 89 | 123/o,o1 |
| 51 | $-SC_3H_7$-n | $-C_3H_7$-iso | H | H | H | $-CH_3$ | S | 71 | 86/o,o1 |
| 52 | -S-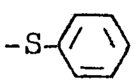 | $-CH_3$ | H | H | H | $-C_2H_5$ | S | 66 | 134/o,o1 |
| 53 | $-OC_2H_5$ | $-C_3H_7$-iso | H | H | H | $-CH_3$ | S | 81 | 69/o,o1 |

| Beispiel Nr. | R | $R^1$ | $R^2$ | $R^3$ | $R^4$ | $R^5$ | X | Ausbeute (% der Theorie) | Physikal. Daten (Brechungsindex; Schmelzpunkt °C/Siedepunkt °C/mbar) |
|---|---|---|---|---|---|---|---|---|---|
| 54 | -O-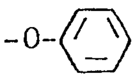-Cl | $-C_3H_7$-iso | H | H | H | $-CH_3$ | S | 69 | 124/o,ol |
| 55 | $-OC_2H_5$ | $-CH_3$ | H | H | H | $-C_2H_5$ | O | 78 | 72/o,ol |
| 56 | $-O-CH_2-C\equiv CH$ | $-C_2H_5$ | H | H | H | $-CH_3$ | S | 73 | |
| 57 | $-CH_3$ | $-C_3H_7$-n | H | H | H | $-CH_3$ | S | 83 | 75/o,ol |
| 58 | $-OC_2H_5$ | $-C_3H_7$-n | H | H | H | $-CH_3$ | S | 9o | 67/o,ol |
| 59 | $-O-CH_2-CH=CH_2$ | $-C_2H_5$ | H | H | H | $-CH_3$ | S | 73 | 8o-85/o,ol |
| 6o | $-O-CH_2-CH=C(CH_3)_2$ | $-C_2H_5$ | H | H | H | $-CH_3$ | S | 29 | $n_D^{22}$:1,5o72 |
| 61 | $-OC_2H_5$ | $-CH_2-CH_2-CH_2-$ | | H | H | H | S | 66 | 96/o,ol |
| 62 | $-OC_2H_5$ | $-C_2H_5$ | H | H | H | $-C_2H_5$ | S | 76 | 7o/o,ol |
| 63 | $-CH_3$ | $-CH_2-CH_2-CH_2-$ | | H | H | H | S | 54 | 82-84 |

| Beispiel Nr. | R | $R^1$ | $R^2$ | $R^3$ | $R^4$ | $R^5$ | X | Ausbeute (% der Theorie) | Physikal. Daten (Brechungsindex; Siedepunkt °C/mbar) |
|---|---|---|---|---|---|---|---|---|---|
| 64 | $-CH_3$ | $-C_3H_7$-n | H | H | H | $-C_2H_5$ | S | 68 | 78/o,ol |
| 65 | $-OC_3H_7$-n | $-C_3H_7$-n | H | H | H | $-C_2H_5$ | S | 69 | 84/o,ol |
| 66 | $-O-CH_2-CH=CH_2$ | $-C_3H_7$-n | H | H | H | $-C_2H_5$ | S | 67 | 88/o,ol |
| 67 | $-CH_3$ | $-CH_2-CH=CH_2$ | H | H | H | H | S | 71 | 78/o,ol |
| 68 | $-OC_2H_5$ | $-CH_2-CH=CH_2$ | H | H | H | H | S | 82 | 83/o,ol |
| 69 | $-O-CH_2-C\equiv CH$ | $-C_3H_7$-n | H | H | H | $-C_2H_5$ | S | 73 | 88/o,ol |
| 7o | $-O-CH_2-CH=CH$ | $-CH_2-CH=CH_2$ | H | H | H | H | S | 43 | 8o-85/o,ol |
| 71 | $-OCH_3$ | $-CH_2-CH=CH_2$ | H | H | H | H | S | 43 | 63-65/o,ol |
| 72 | $-O-CH_2-CH=CH_2$ | $-CH_2-CH=CH_2$ | H | H | H | H | S | 21 | 85-9o/o,ol |
| 73 | $-CH_3$ | $-CH_2-CH=CH_2$ | H | H | H | $-C_2H_5$ | S | 8o | 67/o,ol |

| Beispiel Nr. | R | $R^1$ | $R^2$ | $R^3$ | $R^4$ | $R^5$ | X | Ausbeute (% der Theorie) | Physikal. Daten (Brechungsindex; Schmelzpunkt °C/; Siedepunkt °C/mbar) |
|---|---|---|---|---|---|---|---|---|---|
| 74 | $-OC_2H_5$ | $-CH_2-CH=CH_2$ | H | H | H | $-C_2H_5$ | S | 83 | 78/o,ol |
| 75 | $-OCH_3$ | $-CH_2-CH=CH_2$ | H | H | H | $-C_2H_5$ | S | 78 | 71/o,ol |
| 76 | $-O-CH_2-CH=CH_2$ | $-CH_2-CH=CH_2$ | H | H | H | $-C_2H_5$ | S | 67 | 85/o,ol |
| 77 | $-O-CH_2-CH=CH_2$ | $-CH_3$ | H | H | H | H | S | 65 | $n_D^{25}$:1,5640 |
| 78 | $-O-CH_2-C\equiv CH$ | $-CH_3$ | H | H | H | H | S | 66 | 37 |
| 79 | $-O-CH_2-C\equiv CH$ | $-CH_2-CH=CH_2$ | H | H | H | $-C_2H_5$ | S | | |
| 80 | $-CH_3$ | $-CH_3$ | H | H | H | $-CH_3$ | S | | |
| 81 | $-OC_2H_5$ | $-CH_3$ | H | H | H | $-CH_3$ | S | | |
| 82 | $-OCH_3$ | $-CH_3$ | H | H | H | $-CH_3$ | S | | |
| 83 | $-OCH_2CH=CH_2$ | $-CH_3$ | H | H | H | $-CH_3$ | S | | |
| 84 | $-OCH_2-C\equiv CH$ | $-CH_3$ | H | H | H | 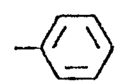 | S | | |

| Beispiel Nr. | R | $R^1$ | $R^2$ | $R^3$ | $R^4$ | $R^5$ | X | Ausbeute (% der Theorie) | Physikal. Daten (Brechungsindex; Schmelzpunkt °C/; Siedepunkt °C/mbar) |
|---|---|---|---|---|---|---|---|---|---|
| 85 | $-O-CH_2-C\equiv CH$ | $-CH_3$ | $-CH_3$ | H | H | 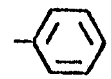 | S | | $n_D^{20}$ : 1,5700 |
| 86 | $-OCH_2-CH=CH_2$ | $-CH_3$ | $-CH_3$ | H | H | 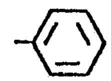 | S | | |
| 87 | $-OCH_2-C\equiv CH$ | H | H | H | H | H | S | | $n_D^{20}$ : 1,5592 |

Beispiel

$LT_{100}$ - Test

Testtiere: Musca domestica, Stamm Weymanns (gegen Carbamate und Phosphorsäureester resistent)

Lösungsmittel: Aceton

Von den Wirkstoffen, Synergisten und Gemischen aus Wirkstoffen und Synergisten werden Lösungen hergestellt und 2,5 ml davon in Petrischalen auf Filterpapierscheiben von 9,5 cm Durchmesser pipetiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Testtiere wird bis zu 6 Stunden laufend kontrolliert. Es wird diejenige Zeit ermittelt, die für eine 100 %ige knock-down-Wirkung erforderlich ist, Wird die $LT_{100}$ nach 6 Stunden nicht erreicht, wird der %-Satz der knock-down gegangenen Testtiere festgestellt.

Konzentrationen der Wirkstoffe, Synergisten und Gemische und ihre Wirkungen gehen aus der nachfolgenden Tabelle hervor.

T a b e l l e

$LT_{100}$-Test mit dem multiresistenten Musca domestica-Stamm Weymanns

| Wirkstoff () Kennbuchstabe | bzw. Synergist () Beispiel Nr. | Konzentrationen in % | $LT_{100}$ nach Minuten oder % nach 360' |
|---|---|---|---|
| 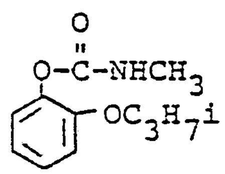 (A) | | 1,0 | 360' = 0 |
| 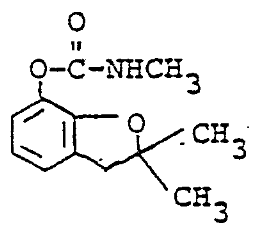 (B) | | 1,0 | 360' = 0 |
| 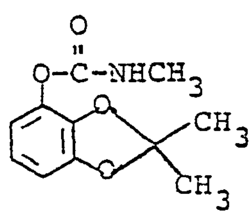 (C) | | 1.0 | 360' = 0 |

Tabelle
(Fortsetzung)

| Wirkstoff () Kennbuchstabe | bzw. Synergist () Beispiel Nr. | Konzentrationen in % | $LT_{100}$ Minuten oder % nach 360' |
|---|---|---|---|
| 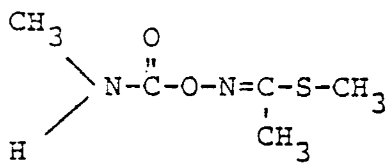 (D) | | 0,04 | 360' |
| 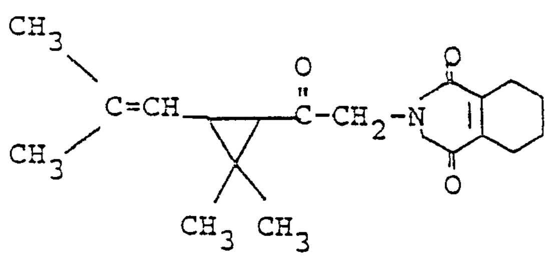 (E) | | 0,04 | 360'=45% |
| 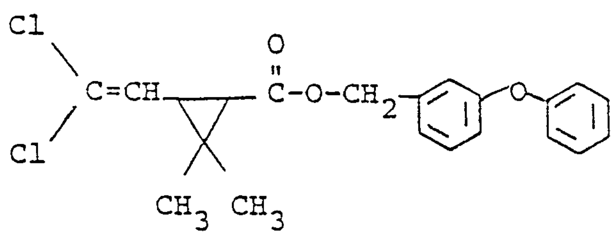 (F) | | 0,0016 | 360'= 5% |

Tabelle
(Fortsetzung)

| Wirkstoff () Kennbuchstabe | bzw. Synergist () Beispiel Nr. | Konzentrationen in % | $LT_{100}$ Minuten oder % nach 360' |
|---|---|---|---|
| 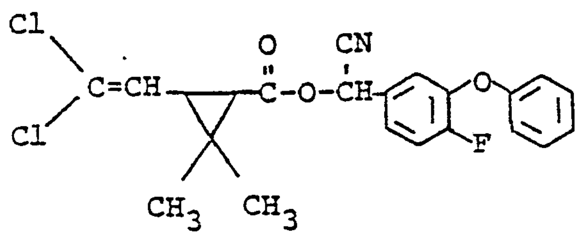 (G) | | 0,0016 | 360'=90% |
| 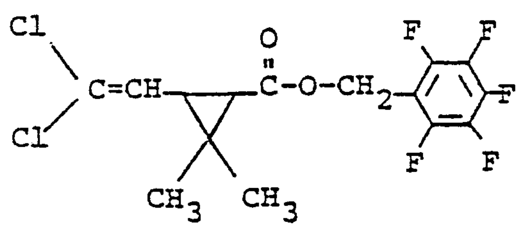 (H) | | 0,0016 | 90' |
| 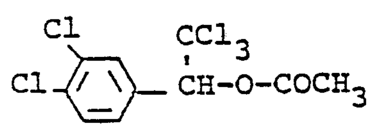 (J) | | 1,0 | 360'=60% |
| 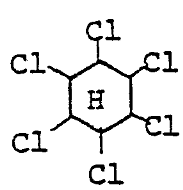 (K) | | 1,0 | 360' |

| Wirkstoffe bzw. ( ) Kennbuchstabe | Synergisten ( ) Beispiel Nr. | Konzentrationen | $LT_{100}$ nach Minuten oder % nach 360' |
|---|---|---|---|
| | ( 1) | 1,0 | 360' = 5 % |
| | ( 2) | 0,2 | 360' = 10 % |
| | ( 6) | 1,0 | 360' = 5 % |
| | (27) | 0,2 | 360' = 15 % |
| | (31) | 0,2 | 360' = 70 % |
| | (19) | 1,0 | 360' = 5 % |
| | (20) | 1,0 | 360' = 5 % |
| | (21) | 0,2 | 360' = 25 % |
| | (22) | 1,0 | 360' = 5 % |
| | (25) | 0,2 | 360' = 25 % |
| | ( 5) | 1,0 | 360' = 0 % |
| | (12) | 1,0 | 360' = 0 % |
| | ( 9) | 1,0 | 360' = 0 % |
| | (16) | 1,0 | 360' = 0 % |
| | (17) | 1,0 | 360' = 0 % |
| | (35) | 0,2 | 360' = 50 % |
| | (36) | 0,2 | 360' = 30 % |
| | (32) | 0,2 | 360' = 0 % |
| | (53) | 1,0 | 360' = 0 % |
| | (54) | 1,0 | 360' = 0 % |
| | (57) | 1,0 | 360' = 90 % |
| | (59) | 1,0 | 360' = 25 % |
| | (29) | 0,2 | 360' = 0 % |
| | (44) | 0,2 | 360' = 70 % |
| | (48) | 0,2 | 360' = 50 % |
| | (51) | 1,0 | 360' = 15 % |
| | (45) | 1,0 | 360' = 90 % |
| | (46) | 1,0 | 360' = 10 % |
| | (42) | 0,2 | 360' = 0 % |
| | (26) | 0,2 | 360' = 70 % |
| | (56) | 1,0 | 360' = 10 % |
| | (69) | 1,0 | 360' = 20 % |
| | (66) | 1,0 | 360' = 0 % |
| | (67) | 0,2 | 360' = 95 % |
| | (70) | 1,0 | 360' = 0 % |
| | (71) | 0,2 | 360' = 20 % |
| | (74) | 0,2 | 360' = 20 % |
| | (73) | 1,0 | 360' = 90 % |
| | (72) | 0,2 | 360' = 0 % |
| | (77) | 1,0 | 360' = 20 % |
| | (78) | 1,0 | 360' = 80 % |

| Wirkstoffe bzw. Synergisten ( ) Kennbuchstabe ( ) Beispiel Nr. | | | Konzentrationen in % | | | $LT_{100}$ nach Minuten oder % nach 360' |
|---|---|---|---|---|---|---|
| A | + | Piperonylbutoxid | 0,2 | + | 0,2 | 360' = 85 % |
| A | + | 1 | 0,04 | + | 0,04 | 240' |
| A | + | 2 | 0,04 | + | 0,04 | 150' |
| A | + | 6 | 0,04 | + | 0,04 | 360' |
| A | + | 9 | 0,04 | + | 0,04 | 120' |
| A | + | 5 | 0,04 | + | 0,04 | 180' |
| A | + | 12 | 0,2 | + | 0,2 | 180' |
| A | + | 21 | 0,04 | + | 0,04 | 150' |
| A | + | 22 | 0,2 | + | 0,2 | 150' |
| A | + | 25 | 0,04 | + | 0,04 | 150' |
| A | + | 16 | 0,04 | + | 0,04 | 150' |
| A | + | 17 | 0,04 | + | 0,04 | 210' |
| A | + | 19 | 0,04 | + | 0,04 | 360' = 95 % |
| A | + | 20 | 0,04 | + | 0,04 | 210' |
| A | + | 31 | 0,04 | + | 0,04 | 240' |
| A | + | 27 | 0,2 | + | 0,2 | 90' |
| A | + | 35 | 0,04 | + | 0,04 | 90' |
| A | + | 36 | 0,04 | + | 0,04 | 150' |
| A | + | 32 | 0,2 | + | 0,2 | 210' |
| A | + | 53 | 0,04 | + | 0,04 | 150' |
| A | + | 57 | 0,04 | + | 0,04 | 105' |
| A | + | 59 | 0,04 | + | 0,04 | 150' |
| A | + | 29 | 0,04 | + | 0,04 | 90' |
| A | + | 48 | 0,04 | + | 0,04 | 75' |
| A | + | 51 | 0,2 | + | 0,2 | 240' |
| A | + | 42 | 0,04 | + | 0,04 | 150' |
| A | + | 44 | 0,04 | + | 0,04 | 90' |
| A | + | 45 | 0,008 | + | 0,008 | 360' |
| A | + | 26 | 0,04 | + | 0,04 | 105' |
| A | + | 56 | 0,04 | + | 0,04 | 90' |
| A | + | 69 | 0,04 | + | 0,04 | 150' |
| A | + | 66 | 0,04 | + | 0,04 | 210' |
| A | + | 70 | 0,04 | + | 0,04 | 180' |
| A | + | 71 | 0,04 | + | 0,04 | 210' |
| A | + | 74 | 0,04 | + | 0,04 | 90' |
| A | + | 73 | 0,04 | + | 0,04 | 75' |
| A | + | 72 | 0,04 | + | 0,04 | 180' |
| A | + | 77 | 0,04 | + | 0,04 | 180' |
| A | + | 78 | 0,04 | + | 0,04 | 180' |

| Wirkstoffe bzw. ( ) Kennbuchstabe | | Synergisten ( ) Beispiel Nr. | Konzentrationen in % | | | LT 100 nach Minuten oder % nach 360' |
|---|---|---|---|---|---|---|
| B | + | Piperonylbutoxid | 0,2 | + | 0,2 | 360' = 70 % |
| B | + | 5 | 0,2 | + | 0,2 | 90' |
| B | + | 9 | 0,2 | + | 0,2 | 90' |
| B | + | 17 | 0,2 | + | 0,2 | 120' |
| B | + | 20 | 0,2 | + | 0,2 | 150' |
| B | + | 26 | 0,04 | + | 0,04 | 120' |
| B | + | 29 | 0,04 | + | 0,04 | 105' |
| B | + | 35 | 0,04 | + | 0,04 | 180' |
| B | + | 45 | 0,04 | + | 0,04 | 105' |
| B | + | 56 | 0,04 | + | 0,04 | 90' |
| B | + | 57 | 0,04 | + | 0,04 | 90' |
| B | + | 59 | 0,2 | + | 0,2 | 90' |
| B | + | 66 | 0,04 | + | 0,04 | 150' |
| B | + | 67 | 0,04 | + | 0,04 | 105' |
| B | + | 70 | 0,04 | + | 0,04 | 120' |
| B | + | 72 | 0,04 | + | 0,04 | 180' |
| C | + | Piperonylbutoxid | 1,0 | + | 1,0 | 360' = 25% |
| C | + | 5 | 0,04 | + | 0,04 | 210' |
| C | + | 9 | 0,2 | + | 0,2 | 210' |
| C | + | 17 | 0,2 | + | 0,2 | 210' |
| C | + | 20 | 0,2 | + | 0,2 | 180' |
| C | + | 26 | 0,04 | + | 0,04 | 180' |
| C | + | 29 | 0,2 | + | 0,2 | 150' |
| C | + | 36 | 0,2 | + | 0,2 | 150' |
| C | + | 45 | 0,04 | + | 0,04 | 210' |
| C | + | 56 | 0,04 | + | 0,04 | 180' |
| C | + | 57 | 0,04 | + | 0,04 | 150' |
| C | + | 59 | 0,2 | + | 0,2 | 150' |
| C | + | 66 | 0,04 | + | 0,04 | 180' |
| C | + | 67 | 0,2 | + | 0,2 | 120' |
| C | + | 70 | 0,2 | + | 0,2 | 180' |
| C | + | 72 | 0,2 | + | 0,2 | 150' |

| Wirkstoffe bzw. Synergisten ( ) Kennbuchstabe ( ) Beispiel Nr. | | | Konzentrationen in % | | | $LT_{100}$ nach Minuten oder % nach 360' |
|---|---|---|---|---|---|---|
| D | + | Piperonylbutoxid | 0,04 | + | 0,04 | 210' |
| D | + | 1 | 0,04 | + | 0,04 | 180' |
| D | + | 2 | 0,04 | + | 0,04 | 120' |
| D | + | 5 | 0,04 | + | 0,04 | 90' |
| D | + | 9 | 0,04 | + | 0,04 | 120' |
| D | + | 17 | 0,04 | + | 0,04 | 90' |
| D | + | 20 | 0,04 | + | 0,04 | 120' |
| D | + | 26 | 0,008 | + | 0,008 | 150' |
| D | + | 29 | 0,04 | + | 0,04 | 105' |
| D | + | 35 | 0,04 | + | 0,04 | 105' |
| D | + | 36 | 0,04 | + | 0,04 | 120' |
| D | + | 45 | 0,04 | + | 0,04 | 90' |
| D | + | 56 | 0,04 | + | 0,04 | 90' |
| D | + | 57 | 0,04 | + | 0,04 | 75' |
| D | + | 59 | 0,04 | + | 0,04 | 105' |
| D | + | 66 | 0,04 | + | 0,04 | 120' |
| D | + | 67 | 0,04 | + | 0,04 | 90' |
| D | + | 70 | 0,04 | + | 0,04 | 90' |
| D | + | 72 | 0,04 | + | 0,04 | 90' |
| E | + | Piperonylbutoxid | 0,04 | + | 0,04 | 150' |
| E | + | 5 | 0,04 | + | 0,04 | 75' |
| E | + | 12 | 0,008 | + | 0,008 | 60' |
| E | + | 17 | 0,04 | + | 0,04 | 75' |
| E | + | 26 | 0,04 | + | 0,04 | 90' |
| E | + | 29 | 0,04 | + | 0,04 | 120' |
| E | + | 56 | 0,04 | + | 0,04 | 60' |
| E | + | 57 | 0,04 | + | 0,04 | 45' |
| E | + | 59 | 0,04 | + | 0,04 | 75' |
| E | + | 66 | 0,04 | + | 0,04 | 45' |
| E | + | 67 | 0,04 | + | 0,04 | 45' |
| E | + | 70 | 0,04 | + | 0,04 | 105' |
| E | + | 72 | 0,04 | + | 0,04 | 60' |
| F | + | Piperonylbutoxid | 0,0016 | + | 0,0016 | 360' = 10 % |
| F | + | 17 | 0,0016 | + | 0,0016 | 360' = 95 % |

| Wirkstoffe bzw. Synergisten ( ) Kennbuchstabe ( ) Beispiel Nr. | Konzentrationen in % | $LT_{100}$ nach Minuten oder % nach 360' |
|---|---|---|
| G + Piperonylbutoxid | 0,0016 + 0,0016 | 180' |
| G + 5 | 0,0016 + 0,0016 | 90' |
| G + 59 | 0,0016 + 0,0016 | 150' |
| H + Piperonylbutoxid | 0,0016 + 0,0016 | 90' |
| H + 1 | 0,0016 + 0,0016 | 45' |
| H + 6 | 0,0016 + 0,0016 | 45' |
| H + 9 | 0,0016 + 0,0016 | 45' |
| H + 26 | 0,0016 + 0,0016 | 45' |
| H + 29 | 0,0016 + 0,0016 | 60' |
| H + 45 | 0,0016 + 0,0016 | 60' |
| H + 59 | 0,0016 + 0,0016 | 60' |
| H + 67 | 0,0016 + 0,0016 | 60' |
| H + 72 | 0,0016 + 0,0016 | 60' |
| J + Piperonylbutoxid | 0,2 + 0,2 | 360' = 80% |
| J + 1 | 0,04 + 0,04 | 360' |
| J + 2 | 0,04 + 0,04 | 210' |
| J + 5 | 0,04 + 0,04 | 360' = 90% |
| J + 21 | 0,04 + 0,04 | 360' = 95% |
| J + 25 | 0,04 + 0,04 | 360' |
| J + 16 | 0,04 + 0,04 | 240' |
| J + 17 | 0,04 + 0,04 | 360' |
| J + 20 | 0,04 + 0,04 | 360' |
| J + 31 | 0,04 + 0,04 | 240' |
| J + 27 | 0,04 + 0,04 | 360' = 95% |
| J + 6 | 0,04 + 0,04 | 360' |
| J + 32 | 0,04 + 0,04 | 360' |
| J + 35 | 0,04 + 0,04 | 240' |
| J + 36 | 0,04 + 0,04 | 360' |
| J + 53 | 0,04 + 0,04 | 360' = 95% |
| J + 54 | 0,04 + 0,04 | 360' = 80% |
| J + 57 | 0,04 + 0,04 | 360' |
| J + 59 | 0,04 + 0,04 | 360' = 85% |
| J + 29 | 0,04 + 0,04 | 360' = 95% |
| J + 44 | 0,04 + 0,04 | 360' |

| Wirkstoffe bzw. Synergisten ( ) Kennbuchstabe ( ) Beispiel Nr. | Konzentrationen in % | $LT_{100}$ nach Minuten oder % nach 360' |
|---|---|---|
| J + 48 | 0,04 + 0,04 | 360' = 90% |
| J + 51 | 0,04 + 0,04 | 360' = 85% |
| J + 45 | 0,04 + 0,04 | 360' |
| J + 46 | 0,04 + 0,04 | 360' = 80% |
| J + 26 | 0,04 + 0,04 | 360' |
| J + 56 | 0,04 + 0,04 | 210' |
| J + 69 | 0,04 + 0,04 | 210' |
| J + 66 | 0,04 + 0,04 | 360' |
| J + 70 | 0,04 + 0,04 | 240' |
| J + 71 | 0,04 + 0,04 | 180' |
| J + 74 | 0,04 + 0,04 | 360' |
| J + 73 | 0,04 + 0,04 | 180' |
| J + 72 | 0,04 + 0,04 | 360' = 90% |
| J + 77 | 0,04 + 0,04 | 360' |
| J + 78 | 0,04 + 0,04 | 360' |
| K + Piperonylbutoxid | 1,0 + 1,0 | 180' |
| K + 17 | 0,2 + 0,2 | 120' |
| K + 20 | 0,04 + 0,04 | 120' |
| K + 26 | 0,2 + 0,2 | 150' |
| K + 45 | 0,04 + 0,04 | 150' |
| K + 56 | 0,04 + 0,04 | 150' |
| K + 57 | 0,04 + 0,04 | 90' |
| K + 59 | 0,2 + 0,2 | 150' |
| K + 66 | 0,2 + 0,2 | 120' |
| K + 67 | 0,2 + 0,2 | 90' |
| K + 70 | 0,2 + 0,2 | 105' |

Patentansprüche

1) 2-(Thi)Oxo-1,3,2-oxazaphospholane der Formel I

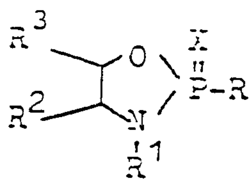

(I)

in welcher

X für Sauerstoff oder Schwefel steht,

R für gegebenenfalls substituierte Reste Alkenyl, Alkinyl, Phenyl, Alkoxy, Alkenoxy, Alkinoxy, Alkylthio, Amino, Mono- oder Dialkylamino, heterocyclisches Amino, Phenoxy oder Phenylthio und für den Fall, daß X für Schwefel steht, auch für gegebenenfalls substituiertes Alkyl steht,

$R^1$ für Wasserstoff oder für gegebenenfalls substituierte Reste Alkyl, Aralkyl, Alkenyl oder Alkinyl steht,

$R^2$ einzeln für Wasserstoff oder gegebenenfalls substituiertes Alkyl, Aralkyl oder zusammen mit $R^1$ für Alkylen steht, und

$R^3$ für Alkyl, oder für den Fall, daß R für Alkenyl, Alkinyl, Alkenoxy, Alkinoxy und/oder $R^1$ für Alkenyl oder Alkinyl stehen, oder für den Fall, daß $R^1$ und $R^2$ zusammen für Alkylen stehen, auch für Wasserstoff oder Phenyl steht.



BAD ORIGINAL

2) Verfahren zur Herstellung von Verbindungen der Formel (I), in welcher R für gegebenenfalls substituierte Reste Alkoxy, Alkenoxy, Alkinoxy, Alkylthio, Mono- oder Dialkylamino, heterocyclisches Amino, Phenoxy oder Phenylthio steht, dadurch gekennzeichnet, daß man 2-(Thi )Oxo-2-halogen-1,3,2-oxazaphospholane der Formel II

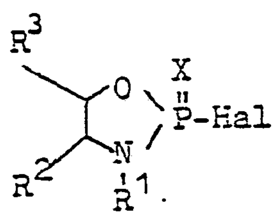

(II)

in welcher

| | |
|---|---|
| X, $R^1$, $R^2$ und $R^3$ | die in Anspruch 1 angegebenen Bedeutungen haben, und |
| Hal | für Halogen, insbesondere für Chlor, steht, |

mit Verbindungen der Formel III

H-R (III)

in welcher

R für gegebenenfalls substituierte Reste Alkoxy, Alkenoxy, Alkinoxy, Alkylthio, Mono- oder Dialkylamino, heterocyclisches Amino, Phenyloxy oder Phenylthio steht

gegebenenfalls in Gegenwart eines Säureakzeptors und gegebenenfalls unter Verwendung eines Verdünnungsmittels umsetzt.

3) Verfahren zur Herstellung von Verbindungen der Formel (I),

in welcher

R für gegebenenfalls substituierte Reste Alkyl, Alkenyl, Alkinyl oder Phenyl steht, dadurch gekennzeichnet daß man (Thio)-phosphonsäure-dichloride der Formel IV

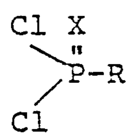

(IV)

in welcher

X für Sauerstoff oder Schwefel steht und

R für gegebenenfalls substituierte Reste Alkyl, Alkenyl, Alkinyl oder Phenyl steht,

mit Amino-alkoholen der Formel V

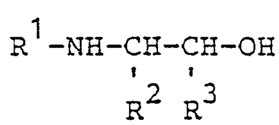

(V)

in welcher

$R^1$, $R^2$ und $R^3$ die oben angegebenen Bedeutungen haben,

gegebenenfalls in Gegenwart eines Säureakzeptors und gegebenenfalls unter Verwendung von Verdünnungsmitteln umsetzt.

4) Schädlingsbekämpfungsmittel gekennzeichnet durch einen Gehalt an Wirkstoffkombinationen bestehend aus 2-(Thi )Oxo-1,3,2-oxazaphospholanen der Formel (I) nach Anspruch 1 und

A) Carbaminsäureestern,

B) Carbonsäureestern,

C) Halogen-(cyclo)alkanen und/oder

D) Phosphorsäure- und Phosphonsäure-estern.

5) Verwendung von Verbindungen der Formel (I) nach Anspruch 1 als Bestandteil von Schädlingsbekämpfungsmitteln.

6) Schädlingsbekämpfungsmittel gemäß Anspruch 4, dadurch gekennzeichnet, daß in der Wirkstoffkombination das Gewichtsverhältnis von Verbindungen der Formel (I) zu den Wirkstoffen A), B), C) und/oder D) zwischen 0,1:10 und 10:0,1 liegt.

7) Verfahren zur Bekämpfung von Schädlingen, dadurch gekennzeichnet, daß man eine Wirkstoffkombination gemäß Anspruch 4 auf Schädlinge und/oder ihren Lebensraum einwirken läßt.

8) Verwendung von Wirkstoffkombinationen gemäß Anspruch 4 zur Bekämpfung von Schädlingen.

9) Verfahren zur Herstellung von Schädlingsbekämpfungsmitteln, dadurch gekennzeichnet, daß man eine Wirkstoffkombination gemäß Anspruch 4 mit Streckmitteln und/oder oberflächenaktiven Mitteln vermischt.

0028752

Europäisches Patentamt

# EUROPÄISCHER RECHERCHENBERICHT

Nummer der Anmeldung
EP 80 10 6569

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| X | CHEMICAL ABSTRACTS, Band 90, Nr. 11, 12. März 1979, Seite 163, Nr. 82066w<br>Columbus, Ohio, U.S.A.<br>S. TAWATA et al.: "Oxazaphospholidines with pesticidal activity. II. Synthesis and insecticidal activities of five-membered cyclic phosphoramidates and phosphoramidothiolates"<br>& NIPPON NOYAKU GAKKAISHI 1978, 3(3), 257-266<br>* Zusammenfassung *<br>-- | 1-9 | C 07 F 9/65<br>A 01 N 57/36 |
| | | | RECHERCHIERTE SACHGEBIETE (Int. Cl.) |
| X | COMPTE-RENDUS ACAD. SC. PARIS. t. 289, 9. Juli 1979, Série C, Seiten 61-63<br>* Ganze Artikel *<br>-- | 1-3 | C 07 F 9/65<br>A 01 N 57/36 |
| | DE - A - 2 810 923 (KYOWA HAKKO K.K.K.)<br>* Ansprüche *<br>---- | 1-9 | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 10-02-1981 | BESLIER |